# FASCICULE DE BREVET EUROPEEN

(11) **EP 3 772 844 B1**
(45) Date de publication et mention de la délivrance du brevet: **12.07.2023**
(21) Numéro de dépôt: 20189249.4
(22) Date de dépôt: 03.08.2020
(51) Int. Cl.: H04L 9/40, H04L 9/08, H04W 4/10, H04W 12/04, H04W 12/76, H04W 4/08

(54) **DISPOSITIF D'INTEROPÉRABILITÉ POUR INTERCONNECTER PLUSIEURS RÉSEAUX DE COMMUNICATION, SYSTÈME ET PROCÉDÉ ASSOCIÉS**
INTEROPERABILITÄTSVORRICHTUNG ZUM VERBINDEN MEHRERER KOMMUNIKATIONSNETZE, ENTSPRECHENDES SYSTEM UND VERFAHREN
INTEROPERABILITY DEVICE FOR INTERCONNECTING A PLURALITY OF COMMUNICATION NETWORKS, ASSOCIATED SYSTEM AND METHOD

(30) Priorité: 08.08.2019 FR 1909088
(43) Date de publication de la demande: 10.02.2021
(73) Titulaire: Airbus DS SLC, 78990 Elancourt (FR)
(72) Inventeur: PATEROUR, Olivier, 78280 Guyancourt (FR)
(74) Mandataire: Lebkiri, Alexandre

(56) Documents cités:
- US-A1- 2017 070 868
- US-A1- 2017 134 444
- "3rd Generation Partnership Project; Technical Specification Group Services and System Aspects; Security of Mission Critical Push To Talk (MCPTT) over LTE (Release 13)", 3GPP STANDARD; TECHNICAL SPECIFICATION; 3GPP TS 33.179, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V13.9.0, 13 juin 2019 (2019-06-13), pages 1-93, XP051754078,

## Description

### DOMAINE TECHNIQUE DE L'INVENTION

Le domaine technique de l'invention est celui de l'interopérabilité de réseaux de communication.

La présente invention concerne un dispositif d'interopérabilité de réseaux de communications et en particulier de réseaux selon le standard 3GPP MCS.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en oeuvre de réseaux professionnels sécurisés. Ces réseaux à bande étroite sont des réseaux nationaux ou locaux : ils sont implémentés par exemple au sein d'une organisation telle qu'une entreprise, au sein d'un pays par exemple pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services » permet ces échanges sécurisés en large bande.

Les problèmes que l'on rencontre en utilisant ces réseaux apparaissent lors d'évènements impliquant des utilisateurs de réseaux différents car ces utilisateurs sont de nationalité différente ou proviennent d'organisations différentes. Il devient alors impossible pour ces utilisateurs de communiquer entre eux.

Ces problèmes peuvent survenir par exemple lors d'une mission proche d'une frontière entre deux pays impliquant des acteurs des deux pays : par exemple une mission telle qu'un incendie à la frontière entre la France et l'Allemagne impliquant des acteurs français et allemands, par exemple des équipes françaises et allemandes de pompier et/ou de forces de l'ordre. En effet, les équipes allemandes utiliseront alors leur propre réseau professionnel de communication allemand et les équipes françaises utiliseront un autre réseau professionnel de communication français. Ces deux réseaux peuvent avoir une architecture et une gestion des utilisateurs différentes, et ne pas accorder les mêmes droits à ses utilisateurs. Par exemple, l'équipe allemande peut avoir des droits supérieurs aux droits de l'équipe française, par exemple car elle est plus qualifiée. Il n'est donc pas possible de simplement interconnecter une station du réseau allemand avec une station du réseau français car cela poserait un risque majeur quant à la sécurité de chacun des réseaux notamment dû aux différences de droits d'accès accordés aux équipes françaises et allemandes.

Ces problèmes peuvent aussi être rencontrés lors d'évènements impliquant des acteurs de plusieurs organisations, par exemple de plusieurs entreprises, chaque entreprise possédant son propre réseau de communication professionnel. Sur des sites industriels communs ou lors d'évènements faisant intervenir des utilisateurs de plusieurs organisations tels que des séminaires, des pannes ou des accidents, il peut alors être nécessaire de mettre en communication des utilisateurs de réseaux de plusieurs organisations sans pour autant compromettre la sécurité de chacun des réseaux interconnectés.

Il existe donc un besoin d'une solution permettant l'interopérabilité de réseaux de communication selon le standard 3GPP MCS tout en conservant le niveau de sécurité de chacun des réseaux de communication,

La publication de demande de brevet US2017/0070868 A1 divulgue une solution d'interopérabilité entre groupes locaux MCPTT (Mission Critical Push To Talk) selon l'état de la technique.

### RESUME DE L'INVENTION

L'invention offre une solution aux problèmes évoqués précédemment, en permettant l'interopérabilité de réseaux de communication selon le standard 3GPP MCS tout en gardant le contrôle sur les communications, les données et la sécurité au niveau local, c'est-à-dire en ne compromettant pas la sécurité de chacun de ces réseaux.

Un aspect de l'invention concerne ainsi un dispositif d'interopérabilité pour interconnecter au moins un premier réseau de communication selon le standard 3GPP MCS avec un deuxième réseau de communication selon le standard 3GPP MCS, le premier réseau de communication comprenant au moins un premier serveur local définissant et gérant au moins un premier groupe local de communication comprenant une première pluralité d'équipements utilisateurs locaux, le deuxième réseau de communication comprenant au moins un deuxième serveur local définissant et gérant au moins un deuxième groupe local de communication comprenant une deuxième pluralité d'équipements utilisateurs locaux, la première pluralité d'équipements utilisateurs et la deuxième pluralité d'équipements utilisateurs n'ayant aucun équipement utilisateur en commun, ledit dispositif d'interopérabilité comprenant :
- Au moins un module de gestion de groupes multimédias, configuré pour :
   - Définir au moins un groupe global de communication, ledit groupe global de communication comprenant au moins le premier groupe local de communication du premier réseau de communication et au moins le deuxième groupe local de communication du deuxième réseau de communication,
   - Générer et distribuer au moins une clé de chiffrement du groupe global de communication au premier serveur local et au deuxième serveur local,
- Au moins un module de gestion de services de communication selon le standard 3GPP MCS, configuré pour :
   - gérer la prise de parole lors de chaque communication de groupe au sein du au moins un groupe global de communication et
   - appliquer une politique réseau comprenant des règles de communication, la politique réseau étant définie par configuration.

Grâce à l'invention, il est possible d'interconnecter deux réseaux nationaux sans que cela ne pose de risque de sécurité, le dispositif d'interopérabilité selon l'invention n'ayant pas connaissance des équipements utilisateurs. En effet, un avantage de l'invention est l'implémentation de groupes globaux de communication comprenant une pluralité de groupes : ainsi définis par configuration au sein du dispositif d'interopérabilité, ces groupes permettent de facilement gérer plusieurs pluralités d'utilisateurs appartenant à différents réseaux sans problèmes d'accès d'utilisateurs non autorisés à des communications sensibles de l'autre réseau. Grâce à ces groupes de communication, le dispositif d'interopérabilité peut interconnecter des utilisateurs de différents réseaux sensibles sans risquer qu'un utilisateur du premier réseau n'ait accès aux parties du deuxième réseau auxquelles il n'a pas le droit d'accéder.

En outre, le dispositif d'interopérabilité selon l'invention permet une gestion simple des utilisateurs : les serveurs MCS locaux peuvent déjà connaître les groupes de communication locaux et peuvent déjà savoir authentifier les équipements utilisateurs de ces groupes de communication locaux, et le simple ajout d'un dispositif d'interopérabilité dont les groupes globaux de communication ont été configurés pour comprendre des groupes locaux de communication déjà configurés au niveau local de deux réseaux ou plus à interconnecter permet rapidement et facilement une communication sans risque de sécurité entre utilisateurs de ces réseaux. Ainsi, seul un administrateur au niveau local peut modifier les utilisateurs appartenant à un groupe local de communication, en retirant ou en ajoutant, permettant ainsi de conserver un niveau de sécurité important. Cela permet aussi de la flexibilité et une rapidité d'intervention par exemple lors de missions urgentes au niveau de frontières ou lors de missions, par exemple dans des usines ou bâtiments, faisant intervenir des acteurs d'organisations différentes. En effet, la configuration des groupes globaux de communication peut être facilement modifiée pour ajouter un groupe local de communication ou en supprimer, sans considérations des utilisateurs par le dispositif d'interopérabilité selon l'invention mais simplement de groupes locaux de communication déjà définis au niveau local. L'invention présente l'avantage de ne réaliser l'intégration d'un réseau local qu'une fois vers le dispositif d'interopérabilité selon l'invention et d'ensuite bénéficier de l'interopérabilité vers tous les autres réseaux de communication interconnectés par le dispositif d'interopérabilité quel que soit le nombre de réseaux interconnectés.

Dans la suite de la description, on emploiera le terme « local » pour définir un réseau existant, par exemple le réseau d'une organisation ou un réseau national. On emploiera le terme « global » pour définir un réseau comprenant au moins deux réseaux locaux interconnectés par le dispositif d'interopérabilité selon l'invention. Ainsi, une communication globale impliquera au moins un utilisateur de chacun des deux réseaux interconnectés par le dispositif d'interconnexion.

Outre les caractéristiques qui viennent d'être évoquées dans le paragraphe précédent, le dispositif d'interopérabilité selon un aspect de l'invention peut présenter une ou plusieurs caractéristiques complémentaires parmi les suivantes, considérées individuellement ou selon toutes les combinaisons techniquement possibles :
- le module de gestion de services de communication est en outre configuré pour gérer toute communication privée entre un équipement utilisateur local de la première pluralité d'équipements utilisateurs locaux et un équipement utilisateur local de la deuxième pluralité d'équipements utilisateurs locaux.
- le au moins un groupe global de communication défini par ledit module de gestion de groupes multimédias est un groupe pré-arrangé ou un groupe de discussion tels que définis par le standard 3GPP MCS.
- le au moins un groupe global de communication défini par ledit module de gestion de groupes multimédias permet d'utiliser les services MCPTT, MCVideo et MCData, lesdits services MCPTT, MCVideo et MCData étant définis par le standard 3GPP MCS.
- ledit module de gestion de groupes multimédias comprend au moins une liste de groupes globaux de communications, le au moins un groupe global de communication étant compris dans ladite liste de groupes globaux de communications.

Un autre aspect de l'invention concerne un système caractérisé en ce qu'il comprend :
- au moins un dispositif d'interopérabilité selon l'invention,
- au moins un premier serveur local définissant et gérant au moins un premier groupe local de communication comprenant une première pluralité d'équipements utilisateurs locaux, ledit premier serveur local et ladite première pluralité d'équipements utilisateurs locaux formant un premier réseau de communication, ledit premier serveur local étant relié audit dispositif d'interopérabilité ;
- au moins un deuxième serveur local définissant et gérant au moins un deuxième groupe local de communication comprenant une deuxième pluralité d'équipements utilisateurs locaux, ledit deuxième serveur local et ladite deuxième pluralité d'équipements utilisateurs locaux formant un deuxième réseau de communication, ledit deuxième serveur local étant relié audit dispositif d'interopérabilité ;
en ce que le premier serveur local gère l'authentification, le profil utilisateur, le profil de groupe et les clés de communication de chaque équipement utilisateur de la première pluralité d'équipements utilisateurs locaux et le deuxième serveur local gère l'authentification, le profil d'utilisateur, le profil de groupe et les clés de communication de chaque équipement utilisateur de la deuxième pluralité d'équipements utilisateurs locaux.

Outre les caractéristiques qui viennent d'être évoquées dans le paragraphe précédent, le système selon un aspect de l'invention peut présenter une ou plusieurs caractéristiques complémentaires parmi les suivantes, considérées individuellement ou selon toutes les combinaisons techniquement possibles :
- Le système comprend une pluralité de dispositifs d'interopérabilité et en ce qu'au moins un serveur local parmi le premier serveur local et le deuxième serveur local est relié à au moins deux dispositifs d'interopérabilité de la pluralité de dispositifs d'interopérabilité.
- la sélection du dispositif d'interopérabilité pour gérer une communication privée provenant d'un équipement utilisateur local de la première pluralité d'équipements utilisateurs locaux est réalisée par le premier serveur local selon une configuration du premier serveur local et en ce que la sélection du dispositif d'interopérabilité pour gérer une communication privée provenant d'un équipement utilisateur local de la deuxième pluralité d'équipements utilisateurs locaux est réalisée par le deuxième serveur local selon une configuration du deuxième serveur local.

Un autre aspect de l'invention concerne un procédé de gestion de services de communication entre un premier réseau de communication selon le standard 3GPP MCS et un deuxième réseau de communication selon le standard 3GPP MCS, ledit procédé étant mis en oeuvre par le système selon l'invention et comprenant au moins l'étape de :
- Etablissement d'au moins un groupe global de communication, le groupe global de communication comprenant au moins un premier groupe local de communication du premier réseau de communication et au moins le deuxième groupe local de communication du deuxième réseau de communication, l'étape d'établissement comprenant les sous-étapes de :
   - génération d'au moins une clé de chiffrement du groupe global de communication par un module de gestion de groupes multimédias d'un dispositif d'interopérabilité et
   - distribution de la au moins une clé de chiffrement du groupe global de communication, par le dispositif d'interopérabilité, au module de gestion de groupes multimédias d'un premier serveur local gérant le premier groupe local de communication et au module de gestion de groupes multimédias d'un deuxième serveur local gérant le deuxième groupe local de communication,
   - distribution de la au moins une clé de chiffrement du groupe global de communication, par le module de gestion de groupes multimédias respectivement du premier serveur local et du deuxième serveur local, à chaque équipement utilisateur local respectivement du premier groupe local de communication et du deuxième groupe local de communication compris dans le groupe global de communication.

Outre les caractéristiques qui viennent d'être évoquées dans le paragraphe précédent, le procédé de gestion de services de communication selon un aspect de l'invention peut présenter une ou plusieurs caractéristiques complémentaires parmi les suivantes, considérées individuellement ou selon toutes les combinaisons techniquement possibles :
- Le procédé comprend en outre l'étape de gestion de la communication entre les équipements utilisateurs locaux du groupe global de communication comprenant la première pluralité d'équipements utilisateurs locaux du premier groupe local de communication et la deuxième pluralité d'équipements utilisateurs locaux du deuxième groupe local de communication, ladite gestion de la communication étant réalisée par le dispositif d'interopérabilité en gérant la prise de parole des équipements utilisateurs au sein du groupe global de communication.
- Le procédé comprend en outre l'étape de sélection du dispositif d'interopérabilité pour gérer une communication privée, par le premier serveur local selon une configuration du premier serveur local si la communication privée provient d'un équipement utilisateur local de la première pluralité d'équipements utilisateurs locaux ou par le deuxième serveur local selon une configuration du deuxième serveur local si la communication privée provient d'un équipement utilisateur local de la deuxième pluralité d'équipements utilisateurs locaux.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système comprenant un dispositif d'interopérabilité pour deux réseaux selon un premier mode de réalisation de l'invention,
- La figure 2 montre une représentation schématique de la distribution d'une clé de chiffrement d'un groupe global de communication par le dispositif d'interopérabilité selon l'invention,
- La figure 3 montre une représentation schématique du routage d'une communication privée par un dispositif d'interopérabilité selon l'invention,
- La figure 4 montre une représentation schématique d'un système comprenant un dispositif d'interopérabilité pour deux réseaux selon un second mode de réalisation de l'invention,
- La figure 5 montre une représentation schématique d'un système comprenant un dispositif d'interopérabilité pour trois réseaux selon un troisième mode de réalisation de l'invention,
- La figure 6 montre une représentation schématique d'un système comprenant deux dispositifs d'interopérabilité pour trois réseaux selon un quatrième mode de réalisation de l'invention.
- La figure 7 montre une représentation schématique d'un procédé de gestion de services de communication mis en oeuvre par le système selon l'invention.

### DESCRIPTION DETAILLEE

Les figures sont présentées à titre indicatif et nullement limitatif de l'invention.

Sauf précision contraire, un même élément apparaissant sur des figures différentes présente une référence unique.

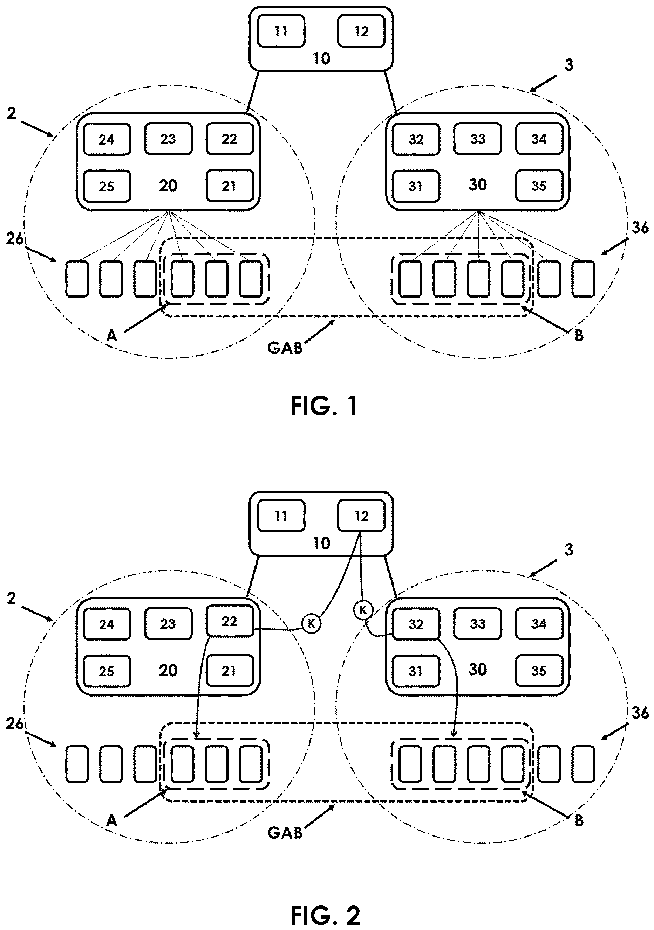

[Fig. 1] montre une représentation schématique d'un système comprenant un dispositif d'interopérabilité pour deux réseaux de communication 2 et 3 selon le standard 3GPP MCS selon un premier mode de réalisation de l'invention.

On entend par « réseau de communication selon le standard 3GPP MCS », un réseau de communication compatible avec le standard 3GPP MCS et plus particulièrement avec la version actuelle du 3GPP qui est la version 15, avec les versions précédentes à partir de la version 13 et avec les versions suivantes intégrant toutes les caractéristiques de l'invention.

Dans ce premier mode de réalisation de l'invention représenté [Fig. 1], le système comprend un dispositif d'interopérabilité 10 qui interconnecte deux réseaux de communication :
- Un premier réseau de communication 2 selon le standard 3GPP MCS comprenant un serveur local 20 et une pluralité d'équipements utilisateurs locaux 26.
- Un deuxième réseau de communication 3 selon le standard 3GPP MCS comprenant un serveur local 30 et une pluralité d'équipements utilisateurs locaux 36.

La premier réseau de communication 2 est interconnecté au deuxième réseau de communication 3 via le dispositif d'interopérabilité 10. Cette interconnexion peut être câblée ou sans-fil, par exemple satellite dans le cas de déploiements tactiques, préférentiellement selon l'interface serveur-serveur décrite par le standard 3GPP MCS dans les spécifications 3GPP TS 23.280 (Common Functional Architecture), 23.379 (MCPTT), 23.281 (MCVideo), 23.282 (MCData), et 33.180 (MCS Security).

Le premier réseau de communication 2 et le deuxième réseau de communication 3 peuvent être fixe, par exemple des réseaux de communication couvrant une entreprise ou une organisation, mobiles, par exemple tactiques, c'est-à-dire utilisés dans le cas d'une mission des forces spéciales, ou une combinaison de ces deux types. Par exemple, le premier réseau de communication 2 peut être fixe et le deuxième réseau de communication 3 peut être mobile. Dans un autre exemple, le deuxième réseau de communication 3 peut être fixe et le premier réseau de communication 2 peut être mobile. Les deux réseaux de communications peuvent aussi être fixes ou peuvent être mobiles.

Un équipement utilisateur de la pluralité d'équipements utilisateurs 26 ou de la pluralité d'équipements utilisateurs 36 est par exemple un smartphone, une tablette ou encore un ordinateur portable.

Le système comprend le serveur local 20 du premier réseau de communication 2 qui comprend au moins :
- un module de gestion d'identité 25 des utilisateurs de la pluralité d'équipements utilisateurs 26,
- un module de gestion de configuration des utilisateurs 24,
- un module de gestion de clés de chiffrement 23,
- un module de gestion de groupes multimédias 22 et
- un module de gestion de services de communication 21.

Le système comprend le serveur local 30 du deuxième réseau de communication 3 qui comprend au moins :
- un module de gestion d'identité 35 des utilisateurs de la pluralité d'équipements utilisateurs 36,
- un module de gestion de configuration des utilisateurs 34,
- un module de gestion de clés de chiffrement 33,
- un module de gestion de groupes multimédias 32 et
- un module de gestion de services de communication 31.

Chaque module de gestion d'identité, respectivement 25 et 35, est configuré pour recevoir et traiter des requêtes d'authentification d'utilisateurs envoyées par les équipements utilisateurs des pluralités d'équipements utilisateurs, respectivement 26 et 36.

Chaque module de gestion de configuration des utilisateurs, respectivement 24 et 34, est configuré pour recevoir une requête de profil utilisateur et envoyer un profil utilisateur à chaque équipement utilisateur des pluralités d'équipements utilisateurs, respectivement 26 et 36, dont la requête d'authentification est acceptée par le module de gestion d'identité, respectivement 25 et 35, du serveur, respectivement 20 et 30.

Chaque module de gestion de groupes multimédias, respectivement 22 et 32, est configuré pour recevoir une requête de profils de groupe multimédia et envoyer au moins un profil de groupe multimédia à chaque équipement utilisateur des pluralités d'équipements utilisateurs, respectivement 26 et 36, dont la requête d'authentification est acceptée par le module de gestion d'identité, respectivement 25 et 35, du serveur, respectivement 20 et 30. Chaque module de gestion de groupes multimédias, respectivement 22 et 32, est aussi configuré pour distribuer les clés de groupes multimédias utilisées pour chiffrer les communications au sein de ces groupes.

Le module de gestion de clés de chiffrement, respectivement 23 et 33, est configuré pour recevoir une requête de données de génération de clé de chiffrement et envoyer au moins une donnée de génération de clé de chiffrement à chaque équipement utilisateur des pluralités d'équipements utilisateurs, respectivement 26 et 36, dont la requête d'authentification est acceptée par le module de gestion d'identité, respectivement 25 et 35, du serveur, respectivement 20 et 30. La ou les donnée(s) de génération de clé(s) de chiffrement reçue(s) permet(tent) alors à l'équipement utilisateur de générer lui-même ses clés de chiffrement des communications privées.

Chaque serveur, respectivement 20 et 30, comporte par exemple un module de gestion des transmissions, respectivement 21 et 31, ce module de gestion des transmissions étant aussi appelé FCS (selon la dénomination anglo-saxonne « Floor Control Server ») dans le cas du service MCPTT (« Mission Critical Push To Talk »), ou « Transmission Control » (pour « Contrôle de transmission » en français) dans le cas des services MCVideo et MCData dans le standard 3GPP MCS.

Le module de gestion de services de communication, respectivement 21 et 31, du serveur, respectivement 20 et 30, est configuré pour gérer, de manière décentralisée, la prise de parole lors d'une communication audio au sein d'un groupe multimédia dans lequel sont affiliés des équipements utilisateurs enregistrés auprès dudit serveur, respectivement 20 et 30, et la prise de transmission lors d'une communication vidéo.

Dans le réseau de communication 2 illustré à la [Fig. 1], chaque équipement utilisateur de la pluralité d'équipements utilisateurs 26 est enregistré auprès du serveur 20. Dans le réseau de communication 3 illustré à la [Fig. 1], chaque équipement utilisateur de la pluralité d'équipements utilisateurs 36 est enregistré auprès du serveur 30.

Les équipements utilisateurs de la pluralité d'équipements utilisateurs 26 du réseau de communication 2 peuvent communiquer soit par communication privée entre deux équipements utilisateurs, soit par communication de groupe entre plusieurs équipements utilisateurs de la pluralité d'équipements utilisateurs 26. Ces communications de groupe sont réalisées au sein de groupes de communications définis par le module de gestion de groupes multimédia 22 du serveur local 20. Par exemple, à la [Fig. 1], un seul groupe de communication A est défini et permet à trois équipements utilisateurs de communiquer entre eux. Pour cela, selon le standard 3GPP MCS, chaque équipement utilisateur du groupe de communication A comprend un profil de groupe de communication A reçu du module de gestion de groupes multimédia 22. Chaque équipement utilisateur du groupe de communication A comprend aussi une clé de communication de groupe A lui permettant de communiquer au sein du groupe de communication A. Cette clé a été envoyée à chaque équipement utilisateur du groupe de communication A par le module de gestion de groupe multimédia 22. Ainsi, le serveur local 20 définit un premier groupe de communication A en ce qu'il associe une pluralité d'équipements utilisateurs au groupe de communication A. Par exemple, cette définition peut être une configuration stockée en mémoire du serveur local 20.

De la même manière, les équipements utilisateurs de la pluralité d'équipements utilisateurs 36 du réseau de communication 3 peuvent communiquer soit par communication privée entre deux équipements utilisateurs, soit par communication de groupe entre plusieurs équipements utilisateurs de la pluralité d'équipements utilisateurs 36. Ces communications de groupe sont réalisées au sein de groupes de communications définis par le module de gestion de groupes multimédia 32 du serveur local 30. Par exemple, à la [Fig. 1], un seul groupe de communication B est défini et permet à quatre équipements utilisateurs de communiquer entre eux. Pour cela, selon le standard 3GPP MCS, chaque équipement utilisateur du groupe de communication B comprend un profil de groupe de communication B reçu du module de gestion de groupes multimédia 32. Chaque équipement utilisateur du groupe de communication B comprend aussi une clé de communication de groupe B lui permettant de communiquer au sein du groupe de communication B. Cette clé a été envoyée à chaque équipement utilisateur du groupe de communication B par le module de gestion de groupe multimédia 32. Ainsi, le serveur local 30 définit un premier groupe de communication B en ce qu'il associe une pluralité d'équipements utilisateurs au groupe de communication B. Par exemple, cette définition peut être une configuration stockée en mémoire du serveur local 30.

Le dispositif d'interopérabilité 10 représenté à la [Fig. 1] comprend un module de gestion de groupes multimédias 12, configuré pour définir au moins un groupe global de communication GAB. Le module de gestion de groupes multimédias 12 représenté à la [Fig. 1] comprend un module de stockage de configuration (non représenté), tel qu'une base de données. Ce module de stockage de configuration comprend une configuration pour l'interopérabilité des réseaux que le dispositif d'interopérabilité 10 interconnecte.

Par exemple, à la [Fig. 1], le dispositif d'interopérabilité 10 comprend une configuration pour l'interopérabilité des deux réseaux de communication 2 et 3. Cette configuration définit le groupe global de communication GAB comme comprenant les deux groupes locaux de communication A et B. Ainsi, une « définition » du groupe global de communication est l'association de groupes de communication locaux. Un groupe global de communication peut par exemple être défini dans un fichier de configuration stocké dans le module de stockage de configuration du module de gestion de groupes multimédias 12, par exemple sous la forme d'une liste comprenant un groupe global de communication GAB et les groupes locaux de communication A et B que le groupe global GAB regroupe. Le groupe global de communication GAB comprend ainsi le groupe local de communication A du réseau de communication 2 et le groupe local de communication B du réseau de communication 3. Le groupe global de communication GAB peut comprendre d'autres groupes locaux de communication. De manière générale, un groupe global de communication selon l'invention comprend au moins deux groupe locaux de communication différents compris dans deux réseaux différents interconnectés par le dispositif d'interopérabilité 1. Grâce à ce groupe global de communication GAB, les utilisateurs des équipements utilisateurs des groupes A et B peuvent communiquer entre eux, par exemple dans le cas d'une mission impliquant ces utilisateurs.

Un groupe global de communication GAB peut être un groupe pré-arrangé (« pre-arranged group ») ou un groupe de discussion (« chat group ») tels que définis par le standard 3GPP MCS.

Un avantage des groupes globaux de communication est qu'ils permettent de proposer les mêmes services que les groupes locaux qu'ils comprennent. Ainsi, un groupe global de communication tel que le groupe GAB est capable de proposer les services de « Push-To-Talk » (selon la dénomination anglo-saxonne pour « Appuyer pour Parler ») MCPTT, de vidéo MCVideo et de données MCData, les services MCPTT, MCVideo et MCDATA étant définis par le standard 3GPP MCS

Un autre avantage de l'invention est qu'avec l'ajout du dispositif d'interopérabilité 10 entre deux réseaux de communication 2 et 3, il est possible d'interconnecter ces deux réseaux sans que ne se posent de risques de sécurité. En effet, seuls les utilisateurs des groupes locaux autorisés A et B de chacun des deux réseaux 2 et 3 pourront communiquer entre eux. Les groupes locaux A et B sont autorisés à communiquer par configuration, la configuration étant stockée dans le module de stockage de configuration du module de gestion de groupes multimédias 12. Un utilisateur dont l'équipement utilisateur n'appartient à aucun de ces deux groupes locaux de communication A et B ne pourra donc communiquer avec aucun utilisateur dont l'équipement utilisateur appartient à l'autre réseau. Par exemple, un équipement utilisateur appartenant au réseau de communication local 2 mais n'appartenant pas au groupe local de communication A ne sera en mesure de communiquer avec aucun des équipements utilisateurs de la pluralité d'équipements utilisateurs 36 du réseau de communication local 3. On rappelle que par « réseau de communication local » on entend un réseau de communication existant, interconnecté avec un autre réseau de communication existant par le dispositif d'interopérabilité 10. Ainsi, un « réseau de communication global » comprend au moins deux réseaux de communication locaux et un dispositif d'interopérabilité 10 selon l'invention. On rappelle que par « groupe de communication global » on entend un groupe de communication comprenant au moins un groupe de communication d'un premier réseau de communication et au moins un groupe de communication d'un deuxième réseau de communication interconnecté avec le premier réseau de communication par le dispositif d'interopérabilité 10.

Le module de gestion de groupes multimédias 12 du dispositif d'interopérabilité 10 est en outre configuré pour générer et distribuer au moins une clé de chiffrement K du groupe global de communication GAB au module de gestion de groupes de communication 22 du premier serveur local 20 et au module de gestion de groupes de communication 32 du deuxième serveur local 30.

La [Fig. 2] montre une représentation schématique de la distribution d'une clé de chiffrement d'un groupe global de communication par le dispositif d'interopérabilité 10 selon l'invention.

Comme représenté à la [Fig. 2], le module de gestion de groupes multimédias 12 du dispositif d'interopérabilité 10 distribue une clé de chiffrement K du groupe global de communication GAB. La clé de chiffrement K est générée automatiquement par un algorithme de génération de clé symétrique implémenté par le module de gestion de groupes multimédias 12. Elle peut ensuite être stockée dans le module de stockage de configuration du module de gestion de groupes multimédias 12. La génération de cette clé a lieu au niveau global, c'est-à-dire qu'elle est effectuée par le dispositif d'interopérabilité 10 qui agit en tant qu'entité « neutre » dans les relations entre les réseaux de communication interconnectés, ce qui permet de minimiser les risques de sécurité : la clé n'est générée par aucun réseau de communication local, et aucun de ces réseaux interconnectés n'a donc la main sur la génération de la clé de chiffrement K, permettant une égalité des droits et une garantie de traitement égal entre les réseaux interconnectés.

Comme représenté à la [Fig. 2], la clé de chiffrement K du groupe global de communication GAB, après avoir été générée et stockée dans le module de stockage de configuration du module de gestion de groupes multimédias 12, est distribuée selon le 3GPP MCS, qui décrit l'interface serveur-serveur, aux modules de gestion de groupes multimédias 22 et 32 des deux serveurs locaux 20 et 30 interconnectés. Chaque serveur local 20 et 30 distribue alors aux équipements utilisateurs appartenant au groupe global de communication GAB la clé de communication K reçue du dispositif d'interopérabilité 10. Pour cela, les serveurs locaux 20 et 30 connaissent déjà les équipements utilisateurs appartenant aux groupes de communication locaux définis par leur module de gestion de groupes multimédias 22 et 32. En effet, lorsqu'un dispositif d'interopérabilité 10 est mis en place pour interconnecter deux réseaux de communication et définir au moins un groupe de communication global comprenant différents groupes de communication locaux, le dispositif d'interopérabilité 10 envoie au moins une information à chaque module de gestion de configuration des utilisateurs 24 et 34 de chaque serveur local 20 et 30 comprenant les groupes locaux de communication appartenant au groupe global défini. Chaque module de gestion de configuration des utilisateurs 24 et 34 stocke alors dans le profil de groupe des groupes locaux de communication appartenant au groupe global défini, par exemple dans le profil des groupes locaux A et B, l'information reçue du dispositif d'interopérabilité 10 ainsi qu'un identifiant du dispositif d'interopérabilité 10 ayant défini ce groupe global GAB.

Un fois en possession de la clé de chiffrement K du groupe global de communication GAB, les équipements utilisateurs sont en mesure de réaliser des communications de groupe global GAB. Toute communication de groupe est routée à via le dispositif d'interopérabilité 10 pour gérer la prise de parole lors de chaque communication de groupe au sein du groupe global de communication GAB et pour appliquer une politique réseau comprenant des règles de communication.

Pour cela, le dispositif d'interopérabilité 10 comprend un module de gestion de services de communication 11 selon le standard 3GPP MCS, configuré pour gérer la prise de parole lors de chaque communication de groupe au sein du groupe global de communication GAB. Cela permet de résoudre les problèmes de sécurité qui se poseraient si un des deux serveurs locaux 20 ou 30 était en charge de la gestion de la prise de parole lors des communications de groupe au sein du groupe global de communication GAB, ayant alors la possibilité de favoriser les équipements utilisateurs d'un réseau de communication ou de l'autre. Dans la présente invention, la prise de parole est gérée par le module de gestion des services de communication 11 du dispositif d'interopérabilité 10 afin d'avoir une entité « neutre » en charge de la sécurité dans un contexte de risque de sécurité important.

Le module de gestion de services de communication 11 du dispositif d'interopérabilité est en outre configuré pour appliquer une politique réseau comprenant des règles de communication, la politique réseau étant définie par configuration. Cette politique réseau peut par exemple être explicitée dans un fichier de configuration stocké dans le module de stockage de configuration du module de gestion de groupes multimédias 12. De manière alternative, ce fichier de configuration peut être stocké dans un module de stockage de configuration du module de gestion de services de communication 11 (non représenté).

La politique réseau peut comprendre l'autorisation de certains services uniquement. Par exemple, la politique réseau peut définir que seules les communications de groupe sont autorisées. La politique réseau peut encore définir qu'aucune communication privée n'est autorisée. La politique réseau peut aussi n'autoriser que certains services définis par le standard 3GPP MCS, par exemple que seuls les services MCPTT et MCData sont autorisés mais pas le service MCVideo. La politique réseau peut encore définir une limite de durée de prise de parole de chaque équipement utilisateur (aussi appelé selon la dénomination anglo-saxonne « floor control seizure »). La politique réseau peut aussi comprendre d'autres règles non précisées ici.

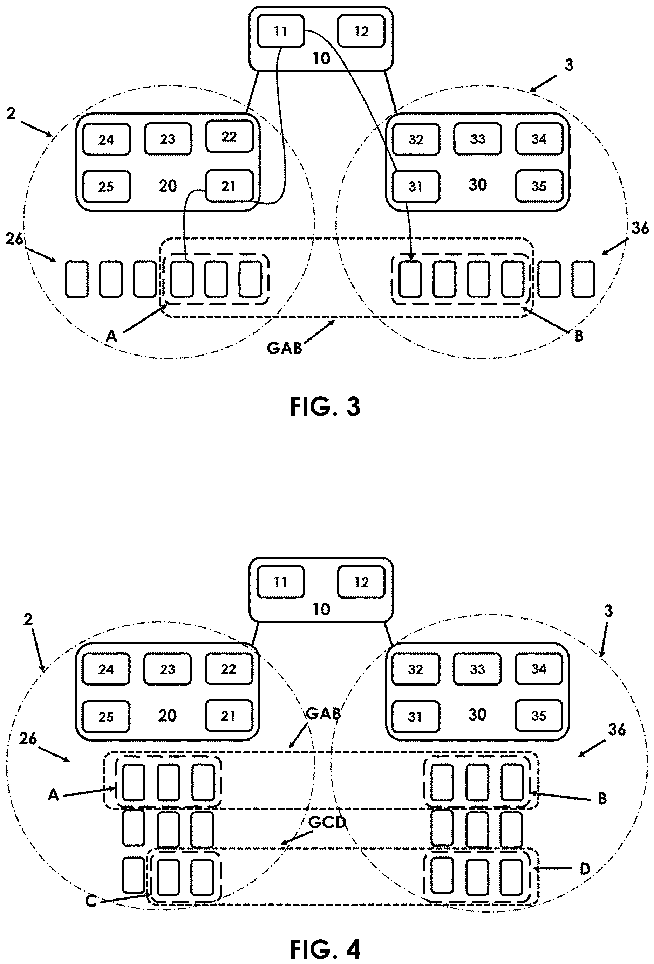

La [Fig. 3] montre une représentation schématique du routage d'une communication privée par un dispositif d'interopérabilité selon l'invention.

Selon l'invention, toutes les communications privées entre deux équipements utilisateurs appartenant à deux réseaux de communication différents interconnectés par le dispositif d'interopérabilité 10 selon l'invention sont routées via le dispositif d'interopérabilité 10 selon l'invention. Cela permet au dispositif d'interopérabilité 10 de réaliser sa fonction de garant de la sécurité de l'interconnexion entre les deux réseaux et d'empêcher la communication entre un équipement utilisateur du réseau de communication 2 et un équipement utilisateur du réseau de communication 3 avec lequel il n'a pas le droit de communiquer. Cela permet aussi d'ajouter un niveau de sécurité supplémentaire, chacun des serveurs locaux 20 et 30 appliquant sa politique réseau locale déjà définie et étant donc toujours garant de la sécurité de son réseau de communication au niveau local.

Par exemple, un équipement utilisateur du réseau de communication 2 réalise une demande de communication privée avec un équipement utilisateur du réseau de communication 3 auprès du serveur local 20. Le serveur local 20 relaie cette demande au dispositif d'interopérabilité 10 selon l'invention qui vérifie alors, selon la politique réseau qu'il stocke, si la demande est en accord avec les règles de communication de la politique réseau. Par exemple, le dispositif d'interopérabilité 10 vérifie que les communications privées entre le réseau de communication 23 et le réseau de communication 3 sont autorisées. Les communications privées peuvent être de différentes natures : MCPTT, MCVideo et MCData. Dans le service type MCData, les acquittement de réception de message mais aussi les accusés de lecture peuvent être gérés selon la politique réseau comprise dans le dispositif d'interopérabilité 10.Grâce à cela, la sécurité de chacun des réseaux est maintenue, la politique réseau définie au niveau du dispositif d'interopérabilité 10 supplantant la politique réseau de chacun des serveurs locaux 20 et 30. Il est ainsi plus aisé de modifier la politique réseau au niveau du dispositif d'interopérabilité 10 car il n'est pas nécessaire de la modifier au niveau de chaque serveur local 20 et 30. En outre, cela permet une neutralité dans la gestion des politiques réseau, afin de ne pas avoir une politique réseau plus stricte dans un réseau que dans l'autre, mais plutôt d'avoir une politique réseau harmonisée et appliquée systématiquement.

La [Fig. 4] montre une représentation schématique d'un système comprenant un dispositif d'interopérabilité pour deux réseaux selon un second mode de réalisation de l'invention.

A la [Fig. 4], le dispositif d'interopérabilité 10 définit deux groupes globaux de communication GAB et GCD.

Le module de gestion de groupes multimédia 22 du serveur local 20 définit deux groupes de communication A et C. Le groupe A permet à trois équipements utilisateurs de communiquer entre eux et le groupe C permet à deux équipements utilisateurs de communiquer.

De la même manière, le module de gestion de groupes multimédia 32 du serveur local 30 définit deux groupes de communication B et D. Les deux groupes locaux de communication B et D permettent chacun à trois équipements utilisateurs de communiquer entre eux.

Dans le second mode de réalisation présenté à la [Fig. 4], le dispositif d'interopérabilité 10 définit deux groupes globaux de communication. Le premier groupe global de communication GAB comprend les deux groupes locaux de communication A et B et permet ainsi à six équipements utilisateurs de communiquer entre eux : trois équipements utilisateurs du réseau de communication 2 et trois équipements utilisateurs du réseau de communication 3. Le deuxième groupe global de communication GCD comprend les deux groupes locaux de communication C et D et permet ainsi à cinq équipements utilisateurs de communiquer entre eux : deux équipements utilisateurs du réseau de communication 2 et trois équipements utilisateurs du réseau de communication 3.

Ce second mode de réalisation permet par exemple de conserver un niveau de sécurité suffisant en n'autorisant à parler entre eux que les utilisateurs des réseaux de communication 2 et 3 ayant un même niveau de droits. Par exemple, les équipements utilisateurs appartenant au groupe local de communication A peuvent avoir le même niveau de droits ou grade que les équipements utilisateurs appartenant au groupe local de communication B, ou un niveau de droits ou grade équivalent. De la même manière, les équipements utilisateurs appartenant au groupe local de communication C peuvent avoir le même niveau de droits ou grade que les équipements utilisateurs appartenant au groupe local de communication D, ou un niveau de droits ou grade équivalent, ce niveau de droit ou grade étant par exemple supérieur au niveau de droits ou grade des équipements utilisateurs des groupes locaux de communication A et B et donc du groupe global de communication GAB.

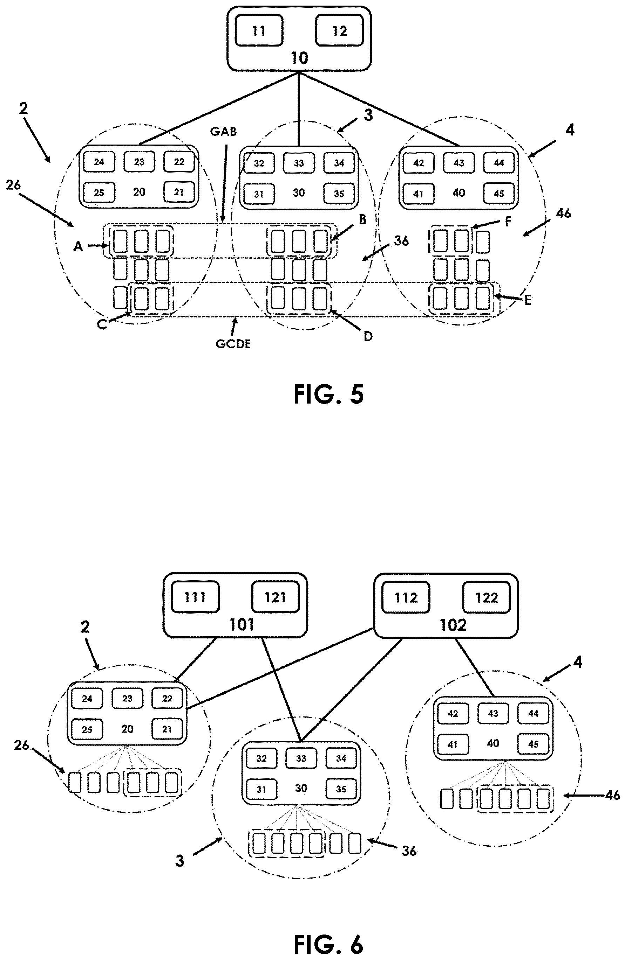

La [Fig. 5] montre une représentation schématique d'un système comprenant un dispositif d'interopérabilité pour trois réseaux selon un troisième mode de réalisation de l'invention.

A la [Fig. 5], le dispositif d'interopérabilité 10 interconnecte trois réseaux de communication locaux 2, 3 et 4. Chaque réseau comprend un serveur local 20, 30 et 40.

Chaque serveur local, respectivement 20, 30 et 40, comprend au moins :
- un module de gestion d'identité, respectivement 25, 35 et 45, de la pluralité d'équipements utilisateurs, respectivement 26, 36 et 46,
- un module de gestion de configuration, respectivement 24, 34 et 44,
- un module de gestion de clés de chiffrement, respectivement 23, 33 et 43,
- un module de gestion de groupes multimédias, respectivement 22 33 et 43 et
- un module de gestion de services de communication, respectivement 21, 31 et 41.

Le module de gestion de groupes multimédia 22 du serveur local 20 définit deux groupes de communication A et C. Le groupe A permet à trois équipements utilisateurs de communiquer entre eux et le groupe C permet à deux équipements utilisateurs de communiquer.

De la même manière, le module de gestion de groupes multimédia 32 du serveur local 30 définit deux groupes de communication B et D. Les deux groupes locaux de communication B et D permettent chacun à trois équipements utilisateurs de communiquer entre eux.

De la même manière, le module de gestion de groupes multimédia 42 du serveur local 40 définit deux groupes de communication E et F. Le groupe D permet à trois équipements utilisateurs de communiquer entre eux et le groupe F permet à deux équipements utilisateurs de communiquer.

Dans le troisième mode de réalisation présenté à la [Fig. 5], le dispositif d'interopérabilité 10 interconnecte trois réseaux de communication 2, 3 et 4 et définit deux groupes globaux de communication. Le premier groupe global de communication GAB comprend les deux groupes locaux de communication A et B et permet ainsi à six équipements utilisateurs de communiquer entre eux : trois équipements utilisateurs du réseau de communication 2 et trois équipements utilisateurs du réseau de communication 3. Le deuxième groupe global de communication GCDE comprend les trois groupes locaux de communication C, D et E et permet ainsi à huit équipements utilisateurs de communiquer entre eux : deux équipements utilisateurs du réseau de communication 2, trois équipements utilisateurs du réseau de communication 3 et trois équipements utilisateurs du réseau de communication 4.

Ce troisième mode de réalisation permet par exemple de conserver un niveau de sécurité suffisant en n'autorisant pas à certains utilisateurs des réseaux 2 et 3 de communiquer avec des utilisateurs du réseau 4 tout en pouvant communiquer entre eux. C'est le cas du groupe global de communication GAB, qui ne permet qu'aux équipements utilisateurs des groupes A et B de communiquer entre eux et qui ne leur permet pas de communiquer avec le réseau 4. En outre, le groupe global de communication GCDE permet à des équipements utilisateurs des trois réseaux 2, 3 et 4 de communiquer entre eux tout en garantissant que les équipements utilisateurs des groupes A et B des réseaux 2 et 3 ne pourront communiquer avec aucun équipement utilisateur du réseau 4. Le dispositif d'interopérabilité 10 permet ainsi un cloisonnement et un contrôle total des communication de groupe entre équipements utilisateurs 26, 36 et 46 et entre réseaux de communication 2, 3 et 4, tout en laissant aux serveurs locaux 10, 20 et 30 la gestion des équipements utilisateurs 26, 36 et 46 et donc en ne compromettant pas la sécurité du système entier si le dispositif d'interopérabilité 10 venait à être compromis : ce dernier n'a connaissance d'aucune information concernant les équipements utilisateurs 26, 36 et 46.

La [Fig. 6] montre une représentation schématique d'un système comprenant deux dispositifs d'interopérabilité pour trois réseaux selon un quatrième mode de réalisation de l'invention.

Dans ce quatrième mode de réalisation représenté à la [Fig. 6], le système comprend deux dispositifs d'interopérabilité 101 et 102 selon l'invention.

Un premier dispositif d'interopérabilité 101 interconnecte deux réseaux de communication 2 et 3. Ce premier dispositif d'interopérabilité 101 permet d'appliquer une première politique réseau entre ces deux réseaux 2 et 3, par exemple une politique réseau souple.

Un deuxième dispositif d'interopérabilité 102 interconnecte trois réseaux de communication 2, 3 et 4 et permet d'appliquer une deuxième politique réseau, par exemple une politique réseau stricte.

Ainsi, il est possible de définir des groupes globaux de communication comprenant différents niveaux de politique réseau en fonction des réseaux qu'ils couvrent. Il est possible de définir que lorsque des équipements utilisateurs des réseaux de communication 2 et 3 communiquent entre eux, une politique réseau souple est à appliquer, alors que quand des équipements utilisateurs des réseaux 2, 3 et 4 communiquent entre eux, une politique réseau plus stricte est à appliquer, car les communications des équipements utilisateurs des réseaux 2, 3 et 4 peuvent être plus sensibles que lorsque des équipements utilisateurs des réseaux 2 et 3 seuls communiquent entre eux.

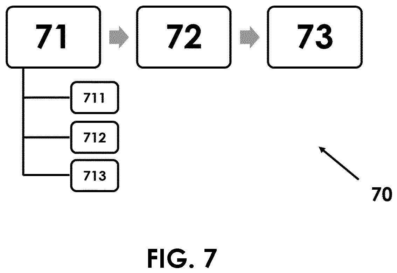

La [Fig. 7] montre une représentation schématique d'un procédé de gestion de services de communication entre deux réseaux de communication mis en oeuvre par le système selon l'invention.

Le procédé de gestion de services de communication 70 comprend une première étape 71 d'établissement d'un groupe global de communication. Le procédé est par exemple mis en oeuvre dans le système représenté à la [Fig. 1] et comprenant un réseau de communication 2 et un réseau de communication 3, le réseau 2 comprenant un groupe local de communication A et le réseau 3 comprenant un groupe local de communication B.

Cette étape 71 d'établissement d'un groupe global de communication, le groupe global de communication GAB est établi et comprend au moins un premier groupe local de communication A du réseau de communication 2 et au moins un groupe local de communication B du réseau de communication 3.

L'étape 70 d'établissement d'un groupe global de communication comprend les sous-étapes de :
- génération 711 d'au moins une clé de chiffrement K du groupe global de communication GAB par le dispositif d'interopérabilité 10. Cette sous-étape 711 est réalisée par le module de gestion de groupes multimédias 12 du dispositif d'interopérabilité 10.
- distribution 712 de la clé de chiffrement K du groupe global de communication GAB, par le dispositif d'interopérabilité 10, au module de gestion de groupes de communication 22 du serveur local 20 gérant le groupe local de communication A et au module de gestion de groupes de communication 32 du serveur local 30 gérant le groupe local de communication B. Cette sous-étape 712 est réalisée par le module de gestion de groupes multimédias 12 du dispositif d'interopérabilité 10.
- distribution 713 de la clé de chiffrement K du groupe global de communication GAB, par le module de gestion de groupes multimédias 22 et 32 respectivement du serveur local 20 et du serveur local 30, à chaque équipement utilisateur local respectivement du groupe local de communication A et du groupe local de communication B compris dans le groupe global de communication GAB.

Le procédé de gestion de services de communication 70 comprend en outre une deuxième étape 72 de gestion de la communication entre les équipements utilisateurs locaux du groupe global de communication GAB comprenant la première pluralité d'équipements utilisateurs locaux du groupe local de communication A et la deuxième pluralité d'équipements utilisateurs locaux du groupe local de communication B. La gestion de la communication est réalisée par le dispositif d'interopérabilité 10 et notamment par son module de gestion des services de communication 11 en gérant la prise de parole des équipements utilisateurs au sein du groupe global de communication GAB.

Le procédé de gestion de services de communication 70 comprend en outre une deuxième étape 73 de sélection du dispositif d'interopérabilité 10 pour gérer une communication privée, par le serveur local 20 selon une configuration du serveur local 20 si la communication privée provient d'un équipement utilisateur local de la pluralité d'équipements utilisateurs locaux 26 ou par le serveur local 30 selon une configuration du serveur local 30 si la communication privée provient d'un équipement utilisateur local de la pluralité d'équipements utilisateurs locaux 36. La configuration est connue de chaque serveur local 20 et 30 car le dispositif d'interopérabilité 10 leur a transmis précédemment la configuration de groupes globaux de communication que le dispositif d'interopérabilité 10 définit.

## Revendications

1. Dispositif d'interopérabilité (10) pour interconnecter au moins un premier réseau de communication (2) selon le standard 3GPP MCS avec un deuxième réseau de communication (3) selon le standard 3GPP MCS, le premier réseau de communication (2) comprenant au moins un premier serveur local (20) définissant et gérant au moins un premier groupe local de communication (A) comprenant une première pluralité d'équipements utilisateurs locaux, le deuxième réseau de communication (3) comprenant au moins un deuxième serveur local (30) définissant et gérant au moins un deuxième groupe local de communication (B) comprenant une deuxième pluralité d'équipements utilisateurs locaux, la première pluralité d'équipements utilisateurs et la deuxième pluralité d'équipements utilisateurs locaux n'ayant aucun équipement utilisateur local en commun, ledit dispositif d'interopérabilité (10) comprenant :
- Au moins un module de gestion de groupes multimédias (12), configuré pour :
o Définir au moins un groupe global de communication (GAB), ledit groupe global de communication (GAB) comprenant au moins le premier groupe local de communication (A) du premier réseau de communication (2) et au moins le deuxième groupe local de communication (B) du deuxième réseau de communication (3),
oGénérer et distribuer au moins une clé de chiffrement (K) du groupe global de communication (GAB) au premier serveur local (20) et au deuxième serveur local (30),
- Au moins un module de gestion de services de communication (11) selon le standard 3GPP MCS, configuré pour :
o gérer la prise de parole lors de chaque communication de groupe au sein du au moins un groupe global de communication (GAB) et
oappliquer une politique réseau comprenant des règles de communication, la politique réseau étant définie par configuration.

2. Dispositif d'interopérabilité (10) selon la revendication précédente **caractérisé en ce que** le module de gestion de services de communication (12) est en outre configuré pour gérer toute communication privée entre un équipement utilisateur local de la première pluralité d'équipements utilisateurs locaux (26) et un équipement utilisateur local de la deuxième pluralité d'équipements utilisateurs locaux (36).

3. Dispositif d'interopérabilité (10) selon l'une quelconque des revendications précédentes **caractérisé en ce que** le au moins un groupe global de communication (GAB) défini par ledit module de gestion de groupes multimédias (12) est un groupe pré-arrangé ou un groupe de discussion tels que définis par le standard 3GPP MCS.

4. Dispositif d'interopérabilité (10) selon l'une quelconque des revendications précédentes **caractérisé en ce que** le au moins un groupe global de communication (GAB) défini par ledit module de gestion de groupes multimédias (12) permet d'utiliser les services MCPTT, MCVideo et MCData, lesdits services MCPTT, MCVideo et MCData étant définis par le standard 3GPP MCS.

5. Dispositif d'interopérabilité (10) selon l'une quelconque des revendications précédentes **caractérisé en ce que** ledit module de gestion de groupes multimédias (12) comprend au moins une liste de groupes globaux de communications (GAB, GCDE), le au moins un groupe global de communication (GAB) étant compris dans ladite liste de groupes globaux de communications (GAB, GCDE).

6. Système comprenant:
- au moins un dispositif d'interopérabilité (10) selon l'une quelconque des revendications précédentes,
- au moins un premier serveur local (20) configuré pour définir et gérer au moins un premier groupe local de communication (A) comprenant une première pluralité d'équipements utilisateurs locaux, ledit premier serveur local (20) et ladite première pluralité d'équipements utilisateurs locaux formant un premier réseau de communication (2), ledit premier serveur local (20) étant relié audit dispositif d'interopérabilité (10) ;
- au moins un deuxième serveur local (30) configuré pour définir et gérer au moins un deuxième groupe local de communication (B) comprenant une deuxième pluralité d'équipements utilisateurs locaux, ledit deuxième serveur local (30) et ladite deuxième pluralité d'équipements utilisateurs locaux formant un deuxième réseau de communication (3), ledit deuxième serveur local (30) étant relié audit dispositif d'interopérabilité (10) ;
le premier serveur local (20) étant configuré pour gérer l'authentification, le profil utilisateur, le profil de groupe et les clés de communication de chaque équipement utilisateur de la première pluralité d'équipements utilisateurs locaux (26) et le deuxième serveur local (30) étant configuré pour gérer l'authentification, le profil d'utilisateur, le profil de groupe et les clés de communication de chaque équipement utilisateur de la deuxième pluralité d'équipements utilisateurs locaux (36).

7. Système selon la revendication précédente **caractérisé en ce qu'**il comprend une pluralité de dispositifs d'interopérabilité (10) et **en ce qu'**au moins un serveur local parmi le premier serveur local (20) et le deuxième serveur local (30) est relié à au moins deux dispositifs d'interopérabilité (10) de la pluralité de dispositifs d'interopérabilité (10).

8. Système selon la revendication précédente **caractérisé en ce qu'**une sélection d'un dispositif d'interopérabilité (10) pour gérer une communication privée provenant d'un équipement utilisateur local de la première pluralité d'équipements utilisateurs locaux (26) est réalisée par le premier serveur local (20) selon une configuration du premier serveur local (20) et **en ce qu'**une sélection d'un autre dispositif d'interopérabilité (10) pour gérer une communication privée provenant d'un équipement utilisateur local de la deuxième pluralité d'équipements utilisateurs locaux (36) est réalisée par le deuxième serveur local (30) selon une configuration du deuxième serveur local (30).

9. Procédé (70) de gestion de services de communication entre un premier réseau de communication (2) selon le standard 3GPP MCS et un deuxième réseau de communication (3) selon le standard 3GPP MCS, ledit procédé (70) étant mis en oeuvre par le système selon l'une quelconque des revendications 6 à 8 et comprenant au moins l'étape de :
- Etablissement (71) d'au moins un groupe global de communication (GAB), le groupe global de communication (GAB) comprenant au moins un premier groupe local de communication (A) du premier réseau de communication (2) et au moins le deuxième groupe local de communication (B) du deuxième réseau de communication (3), l'étape d'établissement (71) comprenant les sous-étapes de :
o génération (711) d'au moins une clé de chiffrement (K) du groupe global de communication (GAB) par un module de gestion de groupes multimédias (12) d'un dispositif d'interopérabilité (10) et
∘ distribution (712) de la au moins une clé de chiffrement (K) du groupe global de communication (GAB), par le dispositif d'interopérabilité (10), au module de gestion de groupes multimédias (22) d'un premier serveur local (20) gérant le premier groupe local de communication (A) et au module de gestion de groupes multimédias (32) d'un deuxième serveur local (30) gérant le deuxième groupe local de communication (B),
o distribution (713) de la au moins une clé de chiffrement (K) du groupe global de communication (GAB), par le module de gestion de groupes multimédias (22, 32) respectivement du premier serveur local (20) et du deuxième serveur local (30), à chaque équipement utilisateur local respectivement du premier groupe local de communication (A) et du deuxième groupe local de communication (B) compris dans le groupe global de communication (GAB).

10. Procédé (70) de gestion de services de communications selon la revendication précédente **caractérisé en ce qu'**il comprend en outre l'étape de :
- Gestion de la communication (72) entre les équipements utilisateurs locaux du groupe global de communication (GAB) comprenant la première pluralité d'équipements utilisateurs locaux du premier groupe local de communication (A) et la deuxième pluralité d'équipements utilisateurs locaux du deuxième groupe local de communication (B), ladite gestion de la communication (72) étant réalisée par le dispositif d'interopérabilité (10) en gérant la prise de parole des équipements utilisateurs au sein du groupe global de communication (GAB).

11. Procédé (70) de gestion de services de communications selon la revendication 9 **caractérisé en ce qu'**il comprend en outre l'étape de :
- sélection (73) du dispositif d'interopérabilité (10) pour gérer une communication privée, par le premier serveur local (20) selon une configuration du premier serveur local (20) si la communication privée provient d'un équipement utilisateur local de la première pluralité d'équipements utilisateurs locaux (26) ou par le deuxième serveur local (30) selon une configuration du deuxième serveur local (30) si la communication privée provient d'un équipement utilisateur local de la deuxième pluralité d'équipements utilisateurs locaux (36).

## Patentansprüche

1. Interoperabilitätsvorrichtung (10) zur Verbindung mindestens eines ersten Kommunikationsnetzes (2) gemäß dem 3GPP MCS-Standard mit einem zweiten Kommunikationsnetz (3) gemäß dem 3GPP MCS-Standard, wobei das erste Kommunikationsnetz (2) mindestens einen ersten lokalen Server (20) umfasst, der mindestens eine erste lokale Kommunikationsgruppe (A) definiert und verwaltet, die eine erste Vielzahl von lokalen Benutzergeräten umfasst, wobei das zweite Kommunikationsnetz (3) mindestens einen zweiten lokalen Server (30) umfasst, der mindestens eine zweite lokale Kommunikationsgruppe (B) definiert und verwaltet, die eine zweite Vielzahl von lokalen Benutzergeräten umfasst, wobei die erste Vielzahl von Benutzergeräten und die zweite Vielzahl von lokalen Benutzergeräten kein lokales Benutzergerät gemeinsam haben, wobei die Interoperabilitätsvorrichtung (10) Folgendes umfasst:
- mindestens ein Modul zum Verwalten von Multimediagruppen (12), das konfiguriert ist, um:
o mindestens eine globale Kommunikationsgruppe (GAB) zu definieren, wobei die globale Kommunikationsgruppe (GAB) mindestens die erste lokale Kommunikationsgruppe (A) des ersten Kommunikationsnetzes (2) und mindestens die zweite lokale Kommunikationsgruppe (B) des zweiten Kommunikationsnetzes (3) umfasst,
o mindestens einen Verschlüsselungsschlüssel (K) der globalen Kommunikationsgruppe (GAB) zu generieren und an den ersten lokalen Server (20) und den zweiten lokalen Server (30) zu verteilen,
- mindestens ein Modul zum Verwalten von Kommunikationsdiensten (11) gemäß dem 3GPP MCS-Standard, das konfiguriert ist, um:
o die Beteiligung an der Kommunikation bei jeder Gruppenkommunikation innerhalb der mindestens einen globalen Kommunikationsgruppe (GAB) zu steuern und
o eine Netzwerkrichtlinie anzuwenden, die Kommunikationsregeln umfasst, wobei die Netzwerkrichtlinie mittels Konfiguration festgelegt wird.

2. Interoperabilitätsvorrichtung (10) nach dem vorhergehenden Anspruch, **dadurch gekennzeichnet, dass** das Modul zum Verwalten von Kommunikationsdiensten (12) ferner konfiguriert ist, um jegliche private Kommunikation zwischen einem lokalen Benutzergerät der ersten Vielzahl von lokalen Benutzergeräten (26) und einem lokalen Benutzergerät der zweiten Vielzahl von lokalen Benutzergeräten (36) zu verwalten.

3. Interoperabilitätsvorrichtung (10) nach einem der vorhergehenden Ansprüche, **dadurch gekennzeichnet, dass** die mindestens eine globale Kommunikationsgruppe (GAB), die von dem Modul zum Verwalten von Multimediagruppen (12) definiert wird, eine zuvor festgelegte Gruppe oder eine Diskussionsgruppe ist, wie sie im 3GPP MCS-Standard definiert ist.

4. Interoperabilitätsvorrichtung (10) nach einem der vorhergehenden Ansprüche, **dadurch gekennzeichnet, dass** die mindestens eine globale Kommunikationsgruppe (GAB), die durch das Modul zum Verwalten von Multimediagruppen (12) definiert ist, die Verwendung der Dienste MCPTT, MCVideo und MCData ermöglicht, wobei die Dienste MCPTT, MCVideo und MCData durch den 3GPP-Standard MCS definiert sind.

5. Interoperabilitätsvorrichtung (10) nach einem der vorhergehenden Ansprüche, **dadurch gekennzeichnet, dass** das Modul zum Verwalten von Multimediagruppen (12) mindestens eine Liste von globalen Kommunikationsgruppen (GAB, GCDE) umfasst, wobei die mindestens eine globale Kommunikationsgruppe (GAB) in der Liste der globalen Kommunikationsgruppen (GAB, GCDE) enthalten ist.

6. System, das Folgendes umfasst:
- mindestens eine Interoperabilitätsvorrichtung (10) nach einem der vorhergehenden Ansprüche,
- mindestens einen ersten lokalen Server (20), der konfiguriert, um mindestens eine erste lokale Kommunikationsgruppe (A) zu definieren und zu verwalten, die eine erste Vielzahl von lokalen Benutzergeräten umfasst, wobei der erste lokale Server (20) und die erste Vielzahl von lokalen Benutzergeräten ein erstes Kommunikationsnetzwerk (2) bilden, wobei der erste lokale Server (20) mit der Interoperabilitätsvorrichtung (10) verbunden ist;
- mindestens einen zweiten lokalen Server (30), der konfiguriert ist, um mindestens eine zweite lokale Kommunikationsgruppe (B) zu definieren und zu verwalten, die eine zweite Vielzahl von lokalen Benutzergeräten umfasst, wobei der zweite lokale Server (30) und die zweite Vielzahl von lokalen Benutzergeräten ein zweites Kommunikationsnetzwerk (3) bilden, wobei der zweite lokale Server (30) mit der Interoperabilitätsvorrichtung (10) verbunden ist;
wobei der erste lokale Server (20) konfiguriert ist, um die Authentifizierung, das Benutzerprofil, das Gruppenprofil und die Kommunikationsschlüssel jedes Benutzergeräts der ersten Vielzahl von lokalen Benutzergeräten (26) zu verwalten, und der zweite lokale Server (30) konfiguriert ist, um die Authentifizierung, das Benutzerprofil, das Gruppenprofil und die Kommunikationsschlüssel jedes Benutzergeräts der zweiten Vielzahl von lokalen Benutzergeräten (36) zu verwalten.

7. System nach dem vorhergehenden Anspruch, **dadurch gekennzeichnet, dass** es eine Vielzahl von Interoperabilitätsvorrichtungen (10) umfasst und dass mindestens ein lokaler Server aus dem ersten lokalen Server (20) und dem zweiten lokalen Server (30) mit mindestens zwei Interoperabilitätsvorrichtungen (10) aus der Vielzahl von Interoperabilitätsvorrichtungen (10) verbunden ist.

8. System nach dem vorhergehenden Anspruch, **dadurch gekennzeichnet, dass** eine Auswahl einer Interoperabilitätsvorrichtung (10) zum Verwalten einer privaten Kommunikation, die von einem lokalen Benutzergerät aus der ersten Vielzahl von lokalen Benutzergeräten (26) ausgeht, durch den ersten lokalen Server (20) gemäß einer Konfiguration des ersten lokalen Servers (20) durchgeführt wird und dass eine Auswahl einer weiteren Interoperabilitätsvorrichtung (10) zum Verwalten einer privaten Kommunikation, die von einem lokalen Benutzergerät der zweiten Vielzahl von lokalen Benutzergeräten (36) ausgeht, durch den zweiten lokalen Server (30) gemäß einer Konfiguration des zweiten lokalen Servers (30) durchgeführt wird.

9. Verfahren (70) zum Verwalten von Kommunikationsdiensten zwischen einem ersten Kommunikationsnetz (2) nach dem 3GPP MCS-Standard und einem zweiten Kommunikationsnetz (3) nach dem 3GPP MCS-Standard, wobei das Verfahren (70) durch das System nach einem der Ansprüche 6 bis 8 implementiert wird und mindestens den folgenden Schritt umfasst:
- Einrichten (71) mindestens einer globalen Kommunikationsgruppe (GAB), wobei die globale Kommunikationsgruppe (GAB) mindestens eine erste lokale Kommunikationsgruppe (A) des ersten Kommunikationsnetzes (2) und mindestens die zweite lokale Kommunikationsgruppe (B) des zweiten Kommunikationsnetzes (3) umfasst, wobei der Schritt des Einrichtens (71) die folgenden Teilschritte umfasst:
o Erzeugen (711) mindestens eines Verschlüsselungsschlüssels (K) der globalen Kommunikationsgruppe (GAB) durch ein Modul zum Verwalten von Multimediagruppen (12) einer Interoperabilitätsvorrichtung (10) und
o Verteilen (712) des mindestens einen Verschlüsselungsschlüssels (K) der globalen Kommunikationsgruppe (GAB) durch die Interoperabilitätsvorrichtung (10) an das Modul zum Verwalten von Multimediagruppen (22) eines ersten lokalen Servers (20), der die erste lokale Kommunikationsgruppe (A) verwaltet, und an das Modul zum Verwalten von Multimediagruppen (32) eines zweiten lokalen Servers (30), der die zweite lokale Kommunikationsgruppe (B) verwaltet,
o Verteilen (713) des mindestens einen Verschlüsselungsschlüssels (K) der globalen Kommunikationsgruppe (GAB) durch das Modul zum Verwalten von Multimediagruppen (22, 32) des ersten lokalen Servers (20) bzw. des zweiten lokalen Servers (30) an jedes lokale Benutzergerät der ersten lokalen Kommunikationsgruppe (A) bzw. der zweiten lokalen Kommunikationsgruppe (B), die in der globalen Kommunikationsgruppe (GAB) enthalten ist.

10. Verfahren (70) zum Verwalten von Kommunikationsdiensten nach dem vorhergehenden Anspruch, **dadurch gekennzeichnet, dass** es außerdem den folgenden Schritt umfasst:
- Verwalten der Kommunikation (72) zwischen den lokalen Benutzergeräten der globalen Kommunikationsgruppe (GAB), die die erste Vielzahl von lokalen Benutzergeräten der ersten lokalen Kommunikationsgruppe (A) und die zweite Vielzahl von lokalen Benutzergeräten der zweiten lokalen Kommunikationsgruppe (B) umfasst, wobei das Verwalten der Kommunikation (72) von der Interoperabilitätsvorrichtung (10) durch das Verwalten der Beteiligung der Benutzergeräte an der Kommunikation innerhalb der globalen Kommunikationsgruppe (GAB) erfolgt.

11. Verfahren (70) zum Verwalten von Kommunikationsdiensten nach Anspruch 9, **dadurch gekennzeichnet, dass** es außerdem den folgenden Schritt umfasst:
- Auswahl (73) der Interoperabilitätsvorrichtung (10) zum Verwalten einer privaten Kommunikation, durch den ersten lokalen Server (20) gemäß einer Konfiguration des ersten lokalen Servers (20), wenn die private Kommunikation von einem lokalen Benutzergerät der ersten Vielzahl von lokalen Benutzergeräten (26) ausgeht, oder durch den zweiten lokalen Server (30) gemäß einer Konfiguration des zweiten lokalen Servers (30), wenn die private Kommunikation von einem lokalen Benutzergerät der zweiten Vielzahl von lokalen Benutzergeräten (36) ausgeht.

## Claims

1. Interoperability device (10) for interconnecting at least one first communication network (2) according to the 3GPP MCS standard with a second communication network (3) according to the 3GPP MCS standard, the first communication network (2) comprising at least one first local server (20) defining and managing at least one first local communication group (A) comprising a first plurality of local user equipment, the second communication network (3) comprising at least one second local server (30) defining and managing at least one second local communication group (B) comprising a second plurality of local user equipment, the first plurality of user equipment and the second plurality of local user equipment having no local user equipment in common, said interoperability device (10) comprising:
- At least one multimedia group management module (12), configured to:
o Define at least one global communication group (GAB), said global communication group (GAB) comprising at least the first local communication group (A) of the first communication network (2) and at least the second local communication group (B) of the second communication network (3),
o Generate and distribute at least one encryption key (K) of the global communication group (GAB) to the first local server (20) and to the second local server (30),
- At least one communication services management module (11) according to the 3GPP MCS standard, configured to:
o manage the floor control seizure during each group communication within the at least one global communication group (GAB) and
o apply a network policy comprising communication rules, the network policy being defined by configuration.

2. Interoperability device (10) according to the preceding claim **characterised in that** the communication services management module (12) is furthermore configured to manage all private communication between a local user equipment of the first plurality of local user equipment (26) and a local user equipment of the second plurality of local user equipment (36).

3. Interoperability device (10) according to any preceding claim **characterised in that** the at least one global communication group (GAB) defined by said multimedia group management module (12) is a pre-arranged group or a chat group such as defined by the 3GPP MCS standard.

4. Interoperability device (10) according to any preceding claim **characterised in that** the at least one global communication group (GAB) defined by said multimedia group management module (12) makes it possible to use the MCPTT, MCVideo and MCData services, said services MCPTT, MCVideo and MCData being defined by the 3GPP MCS standard.

5. Interoperability device (10) according to any preceding claim **characterised in that** said multimedia group management module (12) comprises at least one list of global communication groups (GAB, GCDE), the at least one global communication group (GAB) being included in said list of global communication groups (GAB, GCDE).

6. System comprising:
- at least one interoperability device (10) according to any preceding claim,
- at least one first local server (20) configured to define and manage at least one first local communication group (A) comprising a first plurality of local user equipment, said first local server (20) and said first plurality of local user equipment forming a first communication network (2), said first local server (20) being connected to said interoperability device (10);
- at least one second local server (30) configured to define and manage at least one second local communication group (B) comprising a second plurality of local user equipment, said second local server (30) and said second plurality of local user equipment forming a second communication network (3), said second local server (30) being connected to said interoperability device (10);
the first local server (20) being configured to manage the authentication, the user profile, the group profile and the communication keys of each user equipment of the first plurality of local user equipment (26) and the second local server (30) being configured to manage the authentication, the user profile, the group profile and the communication keys of each user equipment of the second plurality of local user equipment (36).

7. System according to the preceding claim **characterised in that** it comprises a plurality of interoperability devices (10) and **in that** at least one local server among the first local server (20) and the second local server (30) is connected to at least two interoperability devices (10) of the plurality of interoperability devices (10).

8. System according to the preceding claim **characterised in that** a selection of an interoperability device (10) to manage a private communication coming from a local user equipment of the first plurality of local user equipment (26) is made by the first local server (20) according to a configuration of the first local server (20) and **in that** a selection of another interoperability device (10) to manage a private communication coming from a local user equipment of the second plurality of local user equipment (36) is made by the second local server (30) according to a configuration of the second local server (30).

9. Method (70) for managing communication services between a first communication network (2) according to the 3GPP MCS standard and a second communication network (3) according to the 3GPP MCS standard, said method (70) being implemented by the system according to any of claims 6 to 8 and comprising at least the step of:
- Establishing (71) at least one global communication group (GAB), the global communication group (GAB) comprising at least one first local communication group (A) of the first communication network (2) and at least the second local communication group (B) of the second communication network (3), the step of establishing (71) comprising the sub-steps of:
o generating (711) at least one encryption key (K) of the global communication group (GAB) by a multimedia group management module (12) of an interoperability device (10) and
o distributing (712) the at least one encryption key (K) of the global communication group (GAB), by the interoperability device (10), to the multimedia group management module (22) of a first local server (20) managing the first local communication group (A) and to the multimedia group management module (32) of a second local server (30) managing the second local communication group (B),
o distributing (713) the at least one encryption key (K) of the global communication group (GAB), by the multimedia group management module (22, 32) respectively of the first local server (20) and of the second local server (30), to each local user equipment respectively of the first local communication group (A) and of the second local communication group (B) included in the global communication group (GAB).

10. Method (70) for managing communication services according to the preceding claim **characterised in that** it further comprises the step of:
- Managing the communication (72) between the local user equipment of the global communication group (GAB) comprising the first plurality of local user equipment of the first local communication group (A) and the second plurality of local user equipment of the second local communication group (B), said managing of the communication (72) being carried out by the interoperability device (10) by managing the floor control seizure of the user equipment within the global communication group (GAB).

11. Method (70) for managing communication services according to claim 9 **characterised in that** it further comprises the step of:
- selecting (73) the interoperability device (10) to manage a private communication, by the first local server (20) according to a configuration of the first local server (20) if the private communication comes from a local user equipment of the first plurality of local user equipment (26) or by the second local server (30) according to a configuration of the second local server (30) if the private communication comes from a local user equipment of the second plurality of local user equipment (36).
